(19) Europäisches Patentamt
European Patent Office
Office européen des brevets

(11) EP 2 743 379 A1

(12) EUROPEAN PATENT APPLICATION
published in accordance with Art. 153(4) EPC

(43) Date of publication:
**18.06.2014 Bulletin 2014/25**

(21) Application number: **13834356.1**

(22) Date of filing: **15.03.2013**

(51) Int Cl.:
***C25C 1/08*** (2006.01) ***C25C 7/04*** (2006.01)

(86) International application number:
**PCT/CN2013/000292**

(87) International publication number:
**WO 2014/048050 (03.04.2014 Gazette 2014/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2012 CN 201210363951**

(71) Applicant: **Lanzhou Jiaotong University**
**Lanzhou, Gansu 730070 (CN)**

(72) Inventors:
- **WANG, Sanfan**
  **Lanzhou**
  **Gansu 730070 (CN)**
- **ZHOU, Jian**
  **Lanzhou**
  **Gansu 730070 (CN)**
- **WANG, Ting**
  **Lanzhou**
  **Gansu 730070 (CN)**
- **ZHAO, Hongjing**
  **Lanzhou**
  **Gansu 730070 (CN)**
- **ZHANG, Xuemin**
  **Lanzhou**
  **Gansu 730070 (CN)**
- **LI, Lezhuo**
  **Lanzhou**
  **Gansu 730070 (CN)**

(74) Representative: **Sun, Yiming**
**HUASUN Patent- und Rechtsanwälte**
**Friedrichstraße 33**
**80801 München (DE)**

# (54) PRODUCTION METHOD OF ELECTRO-DEPOSITING AND REFINING METAL CHLORIDE BY MEMBRANE PROCESS AND PREPARATION METHOD FOR CATION SELECTIVE DIAPHRAGM USED THEREIN

(57) The invention provides a novel production method of electro-depositing and refining metal chloride by a membrane process. The novel production method comprises the following steps: using a cation selective diaphragm and an anion selective diaphragm to divide an electrolytic cell into an anode chamber, a middle partition chamber and a cathode chamber in sequence, wherein an anode, a cathode, an anode liquor and a cathode liquor are respectively arranged in the anode chamber and the cathode chamber correspondingly; the anode liquor is a diluted sulfuric acid solution, the cathode liquor is a acid metal chloride solution, and a diluted hydrochloric acid solution is contained in the middle partition chamber; reducing the metal cation at the cathode, and separating out reduced metal cation in the form of a single simple substance while introducing direct-current power for electrolysis; and simultaneously carrying out water oxidation reaction at the anode to acquire oxygen gas, and 5%-10% of hydrochloric acid solution can be acquired in the middle partition chamber. With the adoption of the production method provided by the invention, the problem that chlorine gas is generated in a normal metal chloride electro-deposition process is solved thoroughly, high-concentration hydrochloric acid byproducts which can be recycled, and high in economic value can be obtained; and moreover, the acquired metal product has good quality, and the method is a novel method satisfying the green metallurgical environment-friendly development.

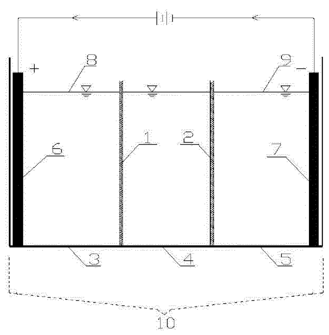


Fig. 1

EP 2 743 379 A1

## Description

### Technical field

The invention discloses a novel production method of electro-depositing and refining metal chloride by a membrane process, which is a new technology of organically combining electrochemistry and diaphragm separation, belonging to the field of metal smelting.

### Background of the invention

Conventional metal refining industrial scale method is an electrodeposition process, that is, using high-concentration and high-purity metal electrolyte, reduces metal ion in the electrolyte into metal through an electrochemical cathode reduction way, thus obtaining high-purity metal, and the process is available for refining of copper, nickel, cobalt and the like. Chloride electrolyte is the most common metal electrolyte in electrodeposition production process, the electrolyte is prepared by metal chloride and pH value is regulated by hydrochloric acid; high-concentration chloride ion in the electrolyte is anodized into chlorine in electrodeposition process, and the generation of chlorine will change the nature of the electrolyte and affect the quality of electric cobalt, and simultaneously, the spilled chlorine will result in serious pollution to the internal environment of the production workshop; some operators even shall wear gas mask to work. A great amount of generated chlorine must be collected and absorbed by alkali, so as to eliminate the influence of the chlorine on external environment, but alkali absorption will result in further improvement of production cost. At present, domestic metal chloride electrodeposition adopts the process, thus being affected by previous shortcomings. To avoid chlorine pollution in chloride electrolysis process, sealed non-diaphragm electrolytic cell technology is generally adopted at abroad, so as to prevent a problem that chlorine pollutes working environment, but problems of inconvenient operation of detaching cathode, and the sealing surface un-tight or easy to damage due to repeated detaching are accompanied.

Ion-exchange diaphragm electrolysis technology is a comprehensive function property technology combining diaphragm separation and electrolysis. Using cation exchange diaphragm or anion exchange diaphragm, the electrolytic cell is divided into a plurality of chambers (for example: cathode chamber, anode chamber and middle chamber). Under electric field force and ion-exchange diaphragm selective transmission property, positive and negative ions in electrolyte solutions of various chambers are selectively permitted or stopped, thus achieving purposes of material concentration, desalination, purification and electrochemical synthesis. Efficient, high-quality and pollution-free properties of the ion-exchange electrolysis technology have drawn high attention of people; the technology has been widely applied to production of chlor-alkali, desalination of seawater and bitter brackish, preparation of industrial water and ultra-pure water, and other aspects, but is rarely adopted in metal smelting industry.

At present, the problems of commercial cation exchange diaphragm is not high in anion blocking rate, generally higher than 90%, poor in size stability and relatively poor in mechanical strength are common. Filling the nano inorganic oxide to organic polymer (such as polyvinylidene fluoride, styrene and other monomers) is a research hot spot at home and abroad, and zirconium dioxide, silicon dioxide, titanium dioxide, aluminium oxide and other nano materials are common nano inorganic oxides. The nano silicon dioxide, added in organic polymer, although can improve the selective transmission of ion exchange diaphragm, will reduce the conductivity of the ion exchange diaphragm, and is relatively high in diaphragm resistance and high in energy consumption. The process of preparing the nano zirconium dioxide and nano titanium dioxide is relatively complex and high in preparation cost, thus being unsuitable for large-scale commercial application.

### Summary of the invention

The invention aims at overcoming the shortcomings of the conventional metal chloride electrodeposition refining process which is serious in environmental pollution due to generation of chlorine, high in treatment cost, poor in metal product quality and the like, thus providing a novel production method of electro-depositing and refining metal chloride by a membrane process for avoiding generation of chlorine from production source and for solving chlorine environmental pollution thoroughly, as well as a preparation method of cation selective diaphragm adopted by the method.

The specific technical solution is as follows: A novel production method of electro-depositing and refining metal chloride by a membrane process, using a cation selective diaphragm and an anion selective diaphragm to divide an electrolytic cell into an anode chamber, a middle partition chamber and a cathode chamber in sequence, wherein an anode and a cathode, as well as anode liquor and cathode liquor are respectively arranged in the anode chamber and the cathode chamber correspondingly; the anode liquor is a diluted sulfuric acid solution, the cathode liquor is an acid metal chloride solution, and a diluted hydrochloric acid solution is contained in the middle partition chamber; reducing the metal cation at the cathode, and separating out reduced metal cation in the form of a single simple substance while

introducing direct-current power for electrolysis; and simultaneously carrying out water oxidation reaction at the anode to acquire oxygen gas, and 5%-10% of hydrochloric acid solution can be acquired in the middle partition chamber.

Said anode is a lead-series alloy or titanium-base semiconductor coating electrode. The current density of the anode is 100A/$m^2$ ~500 A/$m^2$.

The acid metal chloride solution may be $NiCl_2$, $CuCl_2$, $CoCl_2$, $ZnCl_2$ solution, with pH value ranging from 2 to 5.

The cathode is a nickel sheet, a copper sheet, a cobalt sheet or a zinc sheet corresponding to metal cation in the cathode liquor.

The concentration of the diluted hydrochloric acid solution in the middle partition chamber ranges from 0.5% to 1%.

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group, adding nano manganese dioxide while oscillating; after the manganese dioxide is completely dissolved, adding the mixture of high-pressure polyethylene and glycidyl acrylate or glycidyl methacrylate , uniformly mixing and then adding an initiator; uniformly mixing the solution under ultrasonic environment, standing by for 1-2 days, and preparing film casting liquid after defoaming and curing, wherein various materials involved in the step respectively account for 5-10 parts of polyvinylidene fluoride, 1.2-2 parts of styrene, 0.05-0.5 part of manganese dioxide, 0.6-1.3 parts of high-pressure polyethylene, 2-3 parts of glycidyl acrylate or glycidyl methacrylate , 82-90 parts of active group-containing organic solvent and 0.5-2 parts of initiator by weight;

b. at normal temperature, casting the film casting liquid on a glass plate, heating and curing for 8 hours at 120-150°C in a thermostat, and then cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in deionized water for 24 hours, and removing un-reacted monomer.

In the step a of step I, the active group-containing organic solvent is a mixing solution of 2-acrylamide-2-methyl propanesulfonic acid and dimethyl formamide at weight ratio of (8-9): (1-2), or a mixing solution of 2-acrylamide-2-methyl propanesulfonic acid and dimethyl acetamide at weight ratio of (8-9): (1-2), or a mixing solution of sodium allysulfonate and dimethyl formamide at weight ratio of (8-9): (1-2), preferably a mixing solution of 2-acrylamide-2-methyl propanesulfonic acid and dimethyl formamide at weight ratio of 8:1.

The initiator is mixture of dilauroyl peroxide and di-tert-butyl peroxide at weight ratio of 8: 2.

Preferably, various materials involved in the step respectively account for 8 parts of polyvinylidene fluoride, 2 parts of styrene, 0.1 part of manganese dioxide, 0.9 parts of high-pressure polyethylene, 2.5 parts of glycidyl acrylate or glycidyl methacrylate, 85 parts of active group-containing organic solvent and 1.5 parts of initiator by weight.

In the step b of the step II, the monomer containing phenol is either 2-allylphenol or 4-vinylphenol or both of them, which accounts for 5-20% of the mass percentage of the solution A, preferably the 2-allylphenol, which accounts for 15% of the mass percentage of the solution A.

In the step b of the step II, the cross-linking agent is either divinyl benzene or diisocyanate, which accounts for 0.5-1% of the mass percentage of the solution A, preferably 0.8%.

The granularity of the nano manganese dioxide is 10-50nm.

The cation selective diaphragm is the cation selective diaphragm proposed in claim 7; the side of cation selective diaphragm with phenolic group is the middle partition chamber, which is contacted with the diluted hydrochloric acid

solution; and the other side of cation selective diaphragm without phenolic group is the anode chamber, which is contacted with the diluted sulfuric acid solution.

Specifically speaking, under traction of DC electric field force, metal cation in the metal chloride solution in cathode chamber, attracted by cathode, can do directed migration towards the cathode, participate in electrode reduction reaction on the cathode and then be separated in form of metal simple substance; $Cl^-$ moves out of the cathode chamber, penetrates the anion selective diaphragm and enters into the middle partition chamber, and is then fixed in the middle partition chamber through the blockage of the cation selective diaphragm; the diluted sulfuric acid solution contained in the anode chamber, because the oxidation potential of $H_2O$ on anode is lower than that of $SO_4^{2-}$ on anode, is oxidized and participates in electrode oxidation, to generate $H^+$and $O_2$;$H^+$, under traction of DC electric field force, moves out of the anode chamber, penetrates cation selective diaphragm and enters into the middle partition chamber, and then is fixed in the middle partition chamber due to the blockage of the anion selective diaphragm, thus forming HCl; electrochemical reaction formulas refer to (1), (2) and (3):

$$\text{Cathode compartment reduction reaction: } M^{n+} + ne \longrightarrow M \downarrow \quad (1)$$

$$\text{Anode compartment reduction reaction: } H_2O\text{-}2e \longrightarrow 2H^+ + \frac{1}{2}O_2 \uparrow \quad (2)$$

$$\text{Middle compartment reaction: } H^+ + Cl^- \longrightarrow HCl \quad (3)$$

Cation selective diaphragm and preparation thereof are key contents of the invention, because the cation selective diaphragm, which is selected by the invention and is contacted with the diluted hydrochloric acid solution by one side with phenolic group, has high $Cl^-$ blocking function up to 99.9%; one side face of the cation selective diaphragm is grated and polymerized with monomer with phenolic group, to enhance hydrophilicity, and to ionize hydrogen ion, be weak acidity; a layer of negative charge is attached on the surface of the diaphragm, to form a negative electric field, thus effectively preventing chlorine ion in the metal chloride solution in cathode chamber from migrating to anode, and participating in oxidation reaction to form chlorine.

The invention, by adding nano inorganic matter and through plasma irradiation graft polymerization technology, prepares the cation selective diaphragm which is high in anion blockage rate, high in exchange capacity and good in mechanical strength. Nano manganese dioxide is added to base diaphragm material, to enhance ion exchange capacity; due to electrostatic attraction, the relative ion concentration of the base diaphragm surface is improved, reflecting as increment of immobile charge density of the base diaphragm surface, and correspondingly, the ion migration amount is increased; and meanwhile, the conductivity and the mechanical performance of the base diaphragm are improved, and the hydrophilicity of the base diaphragm is enhanced.

Organic monomer is activated and graft-polymerized on the surface of the base diaphragm through plasma; corona discharge has the advantages that corona discharge penetrating power is not strong and penetrating thickness is low, so that the mechanical damage of the base diaphragm is avoided and the performance of the base diaphragm main body is not affected; the corona discharge just acts on the surface of the base diaphragm, and is simple and easy to implement, and rapid in treatment speed. The corona discharge process may generate high-energy particles which are quite strong in energy to several even dozens of electron volts generally, for example electron energy is 0-20eV, metastable state particle is 0-20eV, and UV-light/visible light is 3-40eV. The key energies of common chemical bonds in the polymer are as follows: C-H is 4.3eV, C-N is 2.9eV, C-F is 4.4eV, C=O is 8.0eV, C-C is 3.4eV, and C=C is 6.1 eV. Therefore, the energies of most particles generated by corona discharge are higher than chemical bond energy of the polymer. The high-energy particles, under high-voltage electric field, are accelerated to directly bump into base diaphragm surface, so that C-H, C=C, C=O and other chemical bonds of the macromolecular organic matter of the base diaphragm are broken or opened; meanwhile, partial energies of the high-energy particles are accepted as excited state molecule which has activity; the excited state molecule, which is instable, is decomposed into free radial or ion which can be polymerized with organic monomer and will deposit on the diaphragm surface to form a coating with designability. Through a plasma-irradiated base diaphragm, the surface of the base diaphragm is activated, which is favorable for contact with the organic monomer of the phenolic group, so that strong hydrophilic phenolic group which is difficult to graft can be smoothly grafted and polymerized onto hydrophobic polyvinylidene fluoride and styrene base diaphragm; that is through polymerization, 2-allylphenol and 4-vinylphenol are grafted to one side of the polyvinylidene fluoride and styrene base diaphragm, thus enhancing the hydrophilicity of the base diaphragm; meanwhile, hydrogen ion, which is

ionized from the side of the base diaphragm, has weak acidity, and a negative electric field is formed on the surface of the base diaphragm through a layer of negative charge thereon; in addition, the base diaphragm has an immobile group, namely sulfonic cation exchange diaphragm, on the basis of double-electric layer theory of the cation selective diaphragm and the principle that like ions repel, the anion blocking rate is greatly improved, specifically ion with negative charge is prevented from penetrating.

Table 1 Performance parameters of various cation selective diaphragms

| Cation selective diaphragm | Ion exchange capacity (mmol/g) | Moisture content (%) | diaphragm potential (mV) | Anion blocking rate (%) | |
|---|---|---|---|---|---|
| diaphragm A | 2.1 | 33 | 20 | $Cl^-$ | 99.9 |
| | | | | $SO_4^{2-}$ | 99.8 |
| | | | | $CO_3^{2-}$ | 99.6 |
| diaphragm B | 1.76 | 26 | 15 | $Cl^-$ | 97.4 |
| | | | | $SO_4^{2-}$ | 97.1 |
| | | | | $CO_3^{2-}$ | 97.2 |
| diaphragm C | 1.82 | 26 | 18 | $Cl^-$ | 98.9 |
| | | | | $SO_4^{2-}$ | 98.5 |
| | | | | $CO_3^{2-}$ | 98.6 |

Diaphragm A is cation selective diaphragm of the invention, diaphragm B is sulfonic acid group-containing base diaphragm prepared by manganese dioxide/polyvinylidene fluoride mixture, and diaphragm C is perfluorinated sulfonic acid diaphragm.

Obtained from Table 1, various performance parameters of the diaphragm A are more excellent than that of the diaphragm B and the diaphragm C. Specifically, anion non-transmission rate and chlorine ion blocking rate is up to 99.9%, because a negative electric field is formed at one side of the surface of the diaphragm A due to a layer of negative charge thereon, so as to prevent the chlorine ion from penetrating; the ion exchange capacity and the moisture content of the diaphragm A are more excellent than that of the diaphragm B and the diaphragm C, because the nano manganese dioxide added can increase hydrophilic group in the diaphragm A, thus enhancing the moisture content of the diaphragm A and improving the density of sulfonic acid group in the diaphragm A; and the number of exchangeable counter ions is increased, and ion-exchange capacity is improved.

Method for determination of ion exchange capacity and moisture content: ion exchange capacity is a chemical performance index reflecting concentration of active group in the ion exchange diaphragm and counter ion exchange capacity, which is represented by milligram equivalent number (mmol/g) of active group in each gram of dry film. The cation selective diaphragm is soaked in 1 mol/L HCl solution, so as to convert the diaphragm into H type; the diaphragm is completely flushed by deionized water, and HCl in the diaphragm is discharged until the diaphragm is neutral; the water on the diaphragm surface is absorbed by filter paper, the wet weight $G_{wet}$ of the diaphragm is weighed, and the diaphragm is soaked in 2mol/L NaCl solution for 6 hours; the diaphragm is completely washed by deionized water, leachate and washing water are collected, $H^+$ in the collection liquid is dropped by 0.1 mol/L NaOH, and NaOH dosage V is recorded; the diaphragm is wiped by filter paper, and is dried in a thermostat at 65°C until to constant weight $G_{dry}$.

Calculation formula of ion exchange capacity: $A_{H+}= a/ G_{dry}$, $a=0.1*V$.

Calculation formula of moisture content: $W=(G_{wet}- G_{dry})/ G_{dry}*100$.

$A_{H+}$- ion exchange capacity (mmol/g dry film), a-$H^+$ content (mol) in collection liquid, V-NaOH dosage (L), W-moisture content (%), $G_{Wet}$-wet weight (g), $G_{dry}$-dry weight (g).

Determination method of diaphragm potential:

A diaphragm to be detected is arranged between two chambers which having same kind of electrolyte solutions

(such as KCl solution) but differing in concentration, using saturated calomel electrode as a reference electrode; the electrolyte solution is connected with the calomel electrode through a salt bridge, thus forming a complex primary battery, wherein a DT-830 digital universal meter is used for measuring the potential E Measure of the primary battery, and $E_0$ represents a theoretical potential different of same kind of electrolyte solutions differing in concentration. The diaphragm potential calculation formula is: E Diaphragm =E Measure - $E_0$.

The invention modifies the electrolytic cell in the conventional electrolysis process into diaphragm electrolysis process and an integrated electrolytic cell structure. Two selective diaphragms are adopted to divide the electrolytic cell into three chambers, thus forming an anode chamber, a cathode chamber and a middle chamber which are injected with different electrolytes or receiving liquid. The cathode chamber is still injected with existing chloride-containing electrolyte, so that component, proportion concentration and circulating way are not changed, and the quality of normal chloride refining electrodeposition metal is guaranteed. The anode chamber is injected with $H_2SO_4$ diluted electrolyte, free from chlorine, and the middle partition chamber is injected with HCl diluted receiving liquid, to collect chlorine ions which migrate in cathode chamber and hydrogen ions migrating in anode chamber, so as to maintain normal electrolysis process and to prevent the generation of chlorine, thus solving a problem of generating chlorine in the conventional metal chloride electrodeposition process thoroughly; the chlorine ion can be converted into high-concentration hydrochloric acid for recycle, so as to improve economic value; and the obtained metal product is good in quality, so that the method is a novel method consistent with environmental protection development trend of green metallurgy.

**Brief description of the drawings**

Figure 1: schematic diagram of the novel production method of electro-depositing and refining metal chloride by a membrane process;
Figure 2: schematic diagram of electrochemical reaction of the novel production method of electro-depositing and refining metal chloride by a membrane process;

Wherein, 1-cation selective diaphragm, 2-cathode selective diaphragm, 3-anode chamber, 4-middle partition chamber, 5-cathode chamber, 6-anode, 7-cathode, 8-anode liquid, 9-cathode liquid, 10-electrolytic cell.

**Detailed description of the invention**

A novel production method of electro-depositing and refining metal chloride by a membrane process, using a cation selective diaphragm and an anion selective diaphragm to divide an electrolytic cell into an anode chamber, a middle partition chamber and a cathode chamber in sequence, wherein an anode and a cathode, as well as anode liquor and cathode liquor are respectively arranged in the anode chamber and the cathode chamber correspondingly; the anode liquor is a diluted sulfuric acid solution, the cathode liquor is an acid metal chloride solution, and a diluted hydrochloric acid solution is contained in the middle partition chamber; reducing the metal cation at the cathode, and separating out reduced metal cation in the form of a single simple substance while introducing direct-current power for electrolysis; and simultaneously carrying out water oxidation reaction at the anode to acquire oxygen gas, and 5%-10% of hydrochloric acid solution can be acquired in the middle partition chamber.

Said anode is a lead-series alloy or titanium-base semiconductor coating electrode.

The current density of the anode is 1 00A/$m^2$ ~500 A/$m^2$.

The acid metal chloride solution can be $NiCl_2$, $CuCl_2$, $CoCl_2$, $ZnCl_2$ solution, with pH value ranging from 2 to 5.

The cathode is a nickel sheet, a copper sheet, a cobalt sheet or a zinc sheet corresponding to metal cation in the cathode liquor.

The concentration of the diluted hydrochloric acid solution in the middle partition chamber ranges from 0.5% to 1 %.

The electrolyte solution is controlled at 0-70 °C during electrolysis process.

The electrolysis can be in the form of single-electrolytic bath electrodeposition or multi-electrolytic bath serial electrodeposition

Embodiment 1

High-concentration $NiCl_2$ solution is obtained from nickel-containing waste residue, which is taken as electrodeposition raw material liquid, through acid leaching and ion exchange enrichment, and the $NiCl_2$ solution is 40g/L in concentration and pH value is 4.5. The electrolysis way is single-electrolytic cell electrodeposition, with an inert electrode titanium-coated ruthenium net taken as anode 6 and pure metal nickel plate selected as cathode 7; the cation selective

diaphragm 1 is Nafion117, and the anion selective diaphragm 2 is JAM-II homogeneous-phase anion exchange diaphragm; 0.5% diluted sulfuric acid water solution is used as anode liquid 8, 40g/L $NiCl_2$ solution is taken as cathode liquid 9, and 0.5% diluted hydrochloric acid water solution is contained in the middle partition chamber 4; direct current is conducted for electrolysis, anodic current density is 100A/$m^2$, and metal nickel ion is reduced on the cathode 7 and is separated in form of simple substance which is detected to be 99.8% in purity; and meanwhile, 7% hydrochloric acid water solution is obtained from the middle partition chamber 4, and the concentration of the chlorine ion in the anode liquid 8 is nearly zero.

Embodiment 2

Electrolyte is prepared from solid cobalt chloride, which is purified and cleaned into electrodeposition raw material liquid, $CoCl_2$ electrolyte is 50g/L in concentration and pH value is 3.0. The electrolysis way is multi-electrolytic cell electrodeposition, with an aluminum-silver alloy plate taken as anode 6 and pure metal nickel plate selected as cathode 7; the cation selective diaphragm 1 is Nafion234, and the anion selective diaphragm 2 is JAM- II homogeneous-phase anion exchange diaphragm; 0.8% diluted sulfuric acid water solution is used as anode liquid 8, 50g/L $CoCl_2$ solution is taken as cathode liquid 9, and 0.5% diluted hydrochloric acid water solution is contained in the middle partition chamber 4; direct current is conducted for electrolysis, anodic current density is 200A/$m^2$, and metal cobalt ion is reduced on the cathode 7 and is separated in form of simple substance which is detected to be 99.8% in purity; and meanwhile, 8% hydrochloric acid water solution is obtained from the middle partition chamber 4, and the concentration of the chlorine ion in the anode liquid 8 is nearly zero.

Embodiment 3

High-concentration $NiCl_2$ solution is obtained from nickel-containing waste residue, which is taken as electrodeposition raw material liquid, through acid leaching and ion exchange enrichment, and the $NiCl_2$ solution is 40g/L in concentration and pH value is 4.5. The electrolysis way is single-electrolytic cell electrodeposition, with an inert electrode titanium-coated ruthenium net taken as anode 6 and pure metal nickel plate selected as cathode 7; the cation selective diaphragm 1 is the cation selective diaphragm proposed as the invention, and the anion selective diaphragm 2 is JAM-II homogeneous-phase anion exchange diaphragm; one side of the cation selective diaphragm 1 with the phenolic group is the middle partition chamber which is in contact with the diluted hydrochloric acid solution, and the other side free from the phenolic group is the anode chamber which is in contact with the diluted sulfuric acid solution; 0.5% diluted sulfuric acid water solution is used as anode liquid 8, 40g/L $NiCl_2$ solution is taken as cathode liquid 9, and 0.6% diluted hydrochloric acid water solution is contained in the middle partition chamber 4; direct current is conducted for electrolysis, anodic current density is 100A/$m^2$, and metal nickel ion is reduced on the cathode 7 and is separated in form of simple substance which is detected to be 99.9% in purity; and meanwhile, 7% hydrochloric acid water solution is obtained from the middle partition chamber 4, and the concentration of the chlorine ion in the anode liquid 8 is nearly zero. The cation selective diaphragm 1 is the cation selective diaphragm proposed as the invention, by which $Cl^-$ in the middle partition chamber 4, instead of migrating towards anode under DC electric field traction force, is fixed in the middle partition chamber 4, thus solving a problem of generating chlorine in the conventional metal chloride electrodeposition process thoroughly and avoiding environmental pollution. $H^+$ in the anode liquid 8, under DC electric field traction force, migrates out of anode chamber 3, penetrates the cation selective diaphragm and enters into the middle partition chamber 4, thus forming HCL with the $Cl^-$ in the middle partition chamber 4, and the HCl can be recycled. The cation exchange diaphragm of the invention is high in ion exchange capacity and good in hydrophilicity, and selective diaphragm is good in selective transmission; specifically, for the chlorine ion, the cation exchange diaphragm has quite high blockage rate and long service life.

Embodiment 4

Electrolyte is prepared from solid cobalt chloride, which is purified and cleaned into electrodeposition raw material liquid, $CoCl_2$ electrolyte is 50g/L in concentration and pH value is 3.0. The electrolysis way is multi-electrolytic cell electrodeposition, with an aluminum-silver alloy plate taken as anode 6 and pure metal nickel plate selected as cathode 7; the cation selective diaphragm 1 is the cation selective diaphragm proposed as the invention, and the anion selective diaphragm 2 is JAM- II homogeneous-phase anion exchange diaphragm; one side of the cation selective diaphragm 1 with the phenolic group is the middle partition chamber which is in contact with the diluted hydrochloric acid solution, and the other side free from the phenolic group is the anode chamber which is in contact with the diluted sulfuric acid solution; 0.8% diluted sulfuric acid water solution is used as anode liquid 8, 50g/L $CoCl_2$ solution is taken as cathode liquid 9, and 0.5% diluted hydrochloric acid water solution is contained in the middle partition chamber 4; direct current is conducted for electrolysis, anodic current density is 500A/$m^2$, and metal cobalt ion is reduced on the

cathode 7 and is separated in form of simple substance which is detected to be 99.9% in purity; and meanwhile, 10% hydrochloric acid water solution is obtained from the middle partition chamber 4, and the concentration of the chlorine ion in the anode liquid 8 is nearly zero. The cation selective diaphragm 1 is the cation selective diaphragm proposed as the invention, by which $Cl^-$ in the middle partition chamber 4, instead of migrating towards anode under DC electric field traction force, is fixed in the middle partition chamber 4, thus solving a problem of generating chlorine in the conventional metal chloride electrodeposition process thoroughly and avoiding environmental pollution. $H^+$ in the anode liquid 8, under DC electric field traction force, migrates out of anode chamber 3, penetrates the cation selective diaphragm and enters into the middle partition chamber 4, thus forming HCL with the $Cl^-$ in the middle partition chamber 4, and the HCl can be recycled. The cation exchange diaphragm of the invention is high in ion exchange capacity and good in hydrophilicity, and selective diaphragm is good in selective transmission; specifically, for the chlorine ion, the cation exchange diaphragm has quite high blockage rate and long service life.

Embodiment 5

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group , adding nano manganese dioxide while oscillating; after the manganese dioxide is completely dissolved, adding the mixture of high-pressure polyethylene and glycidyl acrylate or glycidyl methacrylate, uniformly mixing and adding an initiator; uniformly mixing the solution under ultrasonic environment, standing by for 1-2 days, and preparing film casting liquid after defoaming and curing, wherein various materials involved in the step respectively account for 8 parts of polyvinylidene fluoride, 2 parts of styrene, 0.1 part of manganese dioxide, 0.9 part of high-pressure polyethylene, 2.5 parts of glycidyl acrylate or glycidyl methacrylate, 85 parts of active group-containing organic solvent and 1.5 parts of initiator by weight; the active group-containing organic solvent is a mixing solution of 2-acrylamide-2-methyl propanesulfonic acid and dimethyl formamide at weight ratio of 8: 1; and the initiator is mixture of dilauroyl peroxide and di-tert-butyl peroxide at weight ratio of 8: 2;

b. at normal temperature, casting the film casting liquid on a glass plate, heating and curing for 8 hours at 120-150°C in a thermostat, and then cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft, wherein the monomer containing phenolic group is a mixture of 2-allylphenol and 4-vinylphenol at a weight ratio of 3: 2, and accounts for 15% of the mass percentage of the solution A; the cross-linking agent is divinyl benzene, which accounts for 0.8% of the mass percentage of the solution A;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in deionized water for 24 hours, and removing un-reacted monomer.

Embodiment 6

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group, adding nano manganese dioxide while oscillating; after the manganese dioxide is completely dissolved,

adding the mixture of high-pressure polyethylene and glycidyl acrylate or glycidyl methacrylate, uniformly mixing and adding an initiator; uniformly mixing the solution under ultrasonic environment, standing by for 1-2 days, and preparing film casting liquid after defoaming and curing, wherein various materials involved in the step respectively account for 5 parts of polyvinylidene fluoride, 1.2 parts of styrene, 0.05 part of manganese dioxide, 0.6 part of high-pressure polyethylene, 3 parts of glycidyl acrylate or glycidyl methacrylate, 82 parts of active group-containing organic solvent and 0.5 part of initiator by weight; the active group-containing organic solvent is a mixing solution of 2-acrylamide-2-methyl propanesulfonic acid and dimethyl acetamide at weight ratio of 9: 1; and the initiator is mixture of dilauroyl peroxide and di-tert-butyl peroxide at weight ratio of 8: 2;

b. at normal temperature, casting the film casting liquid on a glass plate, heating and curing for 8 hours at 120-150 °C in a thermostat, and then cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft, wherein the monomer containing phenolic group is 2-allylphenol, and accounts for 5% of the mass percentage of the solution A; the cross-linking agent is diisocyanate, which accounts for 0.5% of the mass percentage of the solution A;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in deionized water for 24 hours, and removing un-reacted monomer.

Embodiment 7

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group, adding nano manganese dioxide while oscillating; after the manganese dioxide is completely dissolved, adding the mixture of high-pressure polyethylene and glycidyl acrylate or glycidyl methacrylate, uniformly mixing and adding an initiator; uniformly mixing the solution under ultrasonic environment, standing by for 1-2 days, and preparing film casting liquid after defoaming and curing, wherein various materials involved in the step respectively account for 10 parts of polyvinylidene fluoride, 2 parts of styrene, 0.5 part of manganese dioxide, 1.3 parts of high-pressure polyethylene, 2 parts of glycidyl acrylate or glycidyl methacrylate, 90 parts of active group-containing organic solvent and 2 parts of initiator by weight; the active group-containing organic solvent is a mixing solution of 2-acrylamide-2-methyl propanesulfonic acid and dimethyl acetamide at weight ratio of 4: 1; and the initiator is mixture of dilauroyl peroxide and di-tert-butyl peroxide at weight ratio of 8: 2;

b. at normal temperature, casting the film casting liquid on a glass plate, heating and curing for 8 hours at 120-150°C in a thermostat, and then cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide

to obtain a uniform solution A, and soaking the activated base diaphragm in the solution A for 30-200min for polymerization graft, wherein the monomer containing phenolic group is 4-vinylphenol, and accounts for 20% of the mass percentage of the solution A; the cross-linking agent is diisocyanate, which accounts for 1 % of the mass percentage of the solution A;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in deionized water for 24 hours, and removing un-reacted monomer.

Embodiment 8

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group, adding nano manganese dioxide while oscillating; after the manganese dioxide is completely dissolved, adding the mixture of high-pressure polyethylene and glycidyl acrylate or glycidyl methacrylate, uniformly mixing and adding an initiator; uniformly mixing the solution under ultrasonic environment, standing by for 1-2 days, and preparing film casting liquid after defoaming and curing, wherein various materials involved in the step respectively account for 6 parts of polyvinylidene fluoride, 1.5 parts of styrene, 0.08 part of manganese dioxide, 1 part of high-pressure polyethylene, 2.5 parts of glycidyl acrylate or glycidyl methacrylate, 84 parts of active group-containing organic solvent and 0.9 part of initiator by weight; the active group-containing organic solvent is a mixing solution of 2-acrylamide-2-methyl propanesulfonic acid and dimethyl acetamide at weight ratio of 9: 1; and the initiator is mixture of dilauroyl peroxide and di-tert-butyl peroxide at weight ratio of 8: 2;

b. at normal temperature, casting the film casting liquid on a glass plate, heating and curing for 8 hours at 120-150°C in a thermostat, and then cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft, wherein the monomer containing phenolic group is 2-allylphenol, and accounts for 12% of the mass percentage of the solution A; the cross-linking agent is diisocyanate, which accounts for 0.7% of the mass percentage of the solution A;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in deionized water for 24 hours, and removing un-reacted monomer.

Embodiment 9

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group, adding nano manganese dioxide while oscillating; after the manganese dioxide is completely dissolved, adding the mixture of high-pressure polyethylene and glycidyl acrylate or glycidyl methacrylate, uniformly mixing and adding an initiator; uniformly mixing the solution under ultrasonic environment, standing by for 1-2 days,

and preparing film casting liquid after defoaming and curing, wherein various materials involved in the step respectively account for 9 parts of polyvinylidene fluoride, 1.8 parts of styrene, 0.2 part of manganese dioxide, 1.2 parts of high-pressure polyethylene, 2.5 parts of glycidyl acrylate or glycidyl methacrylate, 88 parts of active group-containing organic solvent and 1.5 parts of initiator by weight; the active group-containing organic solvent is a mixing solution of 2-acrylamide-2-methyl propanesulfonic acid and dimethyl acetamide at weight ratio of 9: 1; and the initiator is mixture of dilauroyl peroxide and di-tert-butyl peroxide at weight ratio of 8: 2;

b. at normal temperature, casting the film casting liquid on a glass plate, heating and curing for 8 hours at 120-150°C in a thermostat, and then cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft, wherein the monomer containing phenolic group is 4-vinylphenol, and accounts for 18% of the mass percentage of the solution A; the cross-linking agent is diisocyanate, which accounts for 0.9% of the mass percentage of the solution A;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in deionized water for 24 hours, and removing un-reacted monomer.

Embodiment 10

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group, adding nano manganese dioxide while oscillating; after the manganese dioxide is completely dissolved, adding the mixture of high-pressure polyethylene and glycidyl acrylate or glycidyl methacrylate, uniformly mixing and adding an initiator; uniformly mixing the solution under ultrasonic environment, standing by for 1-2 days, and preparing film casting liquid after defoaming and curing, wherein various materials involved in the step respectively account for 10 parts of polyvinylidene fluoride, 1.9 parts of styrene, 0.3 part of manganese dioxide, 1 part of high-pressure polyethylene, 2.5 parts of glycidyl acrylate or glycidyl methacrylate, 90 parts of active group-containing organic solvent and 1.8 parts of initiator by weight; the active group-containing organic solvent is a mixing solution of 2-acrylamide-2-methyl propanesulfonic acid and dimethyl acetamide at weight ratio of 4: 1; and the initiator is mixture of dilauroyl peroxide and di-tert-butyl peroxide at weight ratio of 8: 2;

b. at normal temperature, casting the film casting liquid on a glass plate, heating and curing for 8 hours at 120-150°C in a thermostat, and cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft, wherein the monomer containing phenolic group is 4-vinylphenol, and accounts for 12%

of the mass percentage of the solution A; the cross-linking agent is divinyl benzene, which accounts for 0.6% of the mass percentage of the solution A;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in deionized water for 24 hours, and removing un-reacted monomer.

The above description is just for preferred embodiments of the invention, but not limited in the invention. Although detailed description is made for the invention in accordance with the embodiments, the technicians of the field can still modify the technical schemes prescribed within various embodiments, or implement equivalent replacement on partial technical characteristics thereof. Any modification, equivalent replacement, improvement and the like within the spirit and the principle of the invention shall be included within protection scope of the invention.

## Claims

1. A novel production method of electro-depositing and refining metal chloride by a membrane process, using a cation selective diaphragm and an anion selective diaphragm to divide an electrolytic cell into an anode chamber, a middle partition chamber and a cathode chamber in sequence, wherein an anode and a cathode, as well as anode liquor and cathode liquor are respectively arranged in the anode chamber and the cathode chamber correspondingly; the anode liquor is a diluted sulfuric acid solution, the cathode liquor is an acid metal chloride solution, and a diluted hydrochloric acid solution is contained in the middle partition chamber; reducing the metal cation at the cathode, and separating out reduced metal cation in the form of a single simple substance while introducing direct-current power for electrolysis; and simultaneously carrying out water oxidation reaction at the anode to acquire oxygen gas, and 5%-10% of hydrochloric acid solution can be acquired in the middle partition chamber.

2. The novel production method of electro-depositing and refining metal chloride by a membrane process according to claim 1, wherein the anode is a lead-series alloy or titanium-base semiconductor coating electrode.

3. The novel production method of electro-depositing and refining metal chloride by a membrane process according to claim 1, wherein the current density of the anode is 1 00A/$m^2$ ~500 A/$m^2$.

4. The novel production method of electro-depositing and refining metal chloride by a membrane process according to claim 1, wherein the acid metal chloride solution may be $NiCl_2$, $CuCl_2$, $CoCl_2$, $ZnCl_2$ solution, with pH value ranging from 2 to 5.

5. The novel production method of electro-depositing and refining metal chloride by a membrane process according to claim 1, wherein the cathode is a nickel sheet, a copper sheet, a cobalt sheet or a zinc sheet corresponding to metal cation in the cathode liquor.

6. The novel production method of electro-depositing and refining metal chloride by a membrane process according to claim 1, wherein the concentration of the diluted hydrochloric acid solution in the middle partition chamber ranges from 0.5% to 1 %.

7. A method for preparing a cation selective diaphragm, which is **characterized by** comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group, adding nano manganese dioxide while oscillating; after the manganese dioxide is completely dissolved, adding the mixture of high-pressure polyethylene and glycidyl acrylate or glycidyl methacrylate, uniformly mixing and then adding an initiator; uniformly mixing the solution under ultrasonic environment, standing by for 1-2 days, and preparing film casting liquid after defoaming and curing, wherein various materials involved in the step respectively account for 5-10 parts of polyvinylidene fluoride, 1.2-2 parts of styrene, 0.05-0.5 part of manganese dioxide, 0.6-1.3 parts of high-pressure polyethylene, 2-3 parts of glycidyl acrylate or glycidyl methacrylate, 82-90 parts of active group-containing organic solvent and 0.5-2

parts of initiator by weight;

b. at normal temperature, casting the film casting liquid on a glass plate, heating and curing for 8 hours at 120-150°C in a thermostat, and then cooling to room temperature to obtain base membrane;

Step II. Plasma irradiated base membrane grafted phenolic group:

a. after insulating treatment at one side of the base membrane obtained from the step I, implementing surface activation on the base membrane in a plasma reactor, to enhance the surface energy and the hydrophilicity of the base membrane, wherein normal pressure pulsed corona discharge irradiation is 20-100s, wherein voltage is 8-12 KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base membrane in the solution A for 30-200min for polymerization graft;

c. after polymerization graft, carrying out radical graft polymerization on the base membrane in the plasma reactor, wherein normal pressure pulsed corona discharge irradiation is 20-100s, wherein voltage is 8-12KV, and working gas is any one or any mixing gas of pure argon, pure nitrogen and pure helium; soaking in deionized water for 24 hours, and removing un-reacted monomer.

**8.** The preparation method of the cation selective diaphragm according to claim 7, wherein in the step a of step I, the active group-containing organic solvent is a mixing solution of 2-acrylamide-2-methyl propanesulfonic acid and dimethyl formamide at weight ratio of (8-9): (1-2), or a mixing solution of 2-acrylamide-2-methyl propanesulfonic acid and dimethyl acetamide at weight ratio of (8-9): (1-2), or a mixing solution of sodium allysulfonate and dimethyl formamide at weight ratio of (8-9): (1-2), preferably a mixing solution of 2-acrylamide-2-methyl propanesulfonic acid and dimethyl formamide at weight ratio of 8:1;
the initiator is mixture of dilauroyl peroxide and di-tert-butyl peroxide at weight ratio of 8: 2; various materials involved in the step respectively account for 8 parts of polyvinylidene fluoride, 2 parts of styrene, 0.1 part of manganese dioxide, 0.9 parts of high-pressure polyethylene, 2.5 parts of glycidyl acrylate or glycidyl methacrylate, 85 parts of active group-containing organic solvent and 1.5 parts of initiator by weight.

**9.** The preparation method of the cation selective diaphragm according to claim 7, wherein in the step b of the step II, the monomer containing phenol is either 2-allylphenol or 4-vinylphenol or both of them, which accounts for 5-20% of the mass percentage of the solution A, preferably the 2-allylphenol, which accounts for 15% of the mass percentage of the solution A; and the cross-linking agent is either divinyl benzene or diisocyanate, which accounts for 0.5-1% of the mass percentage of the solution A, preferably 0.8%.

**10.** The novel production method of electro-depositing and refining metal chloride by a membrane process according to claim 1, wherein the cation selective diaphragm is the cation selective diaphragm proposed in any one of claims 7-9; the side of cation selective diaphragm with phenolic group is the middle partition chamber, which is contacted with the diluted hydrochloric acid solution; and the other side of cation selective diaphragm without phenolic group is the anode chamber, which is contacted with the diluted sulfuric acid solution.

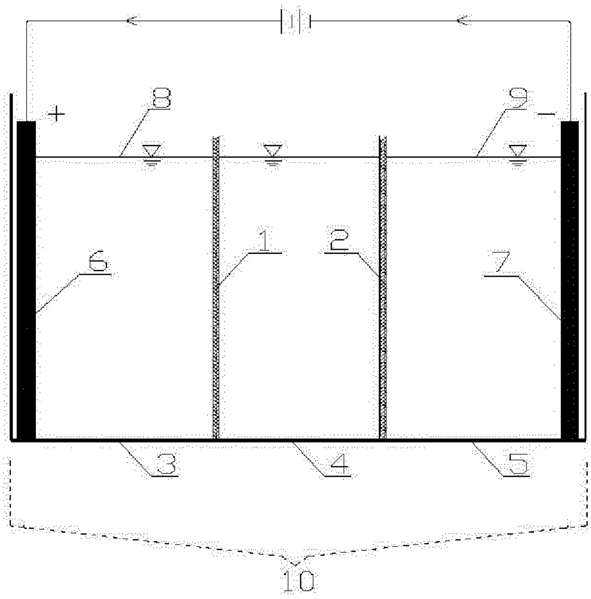
+
8
9
−
6
1
2
7
3
4
5
10

Fig. 1

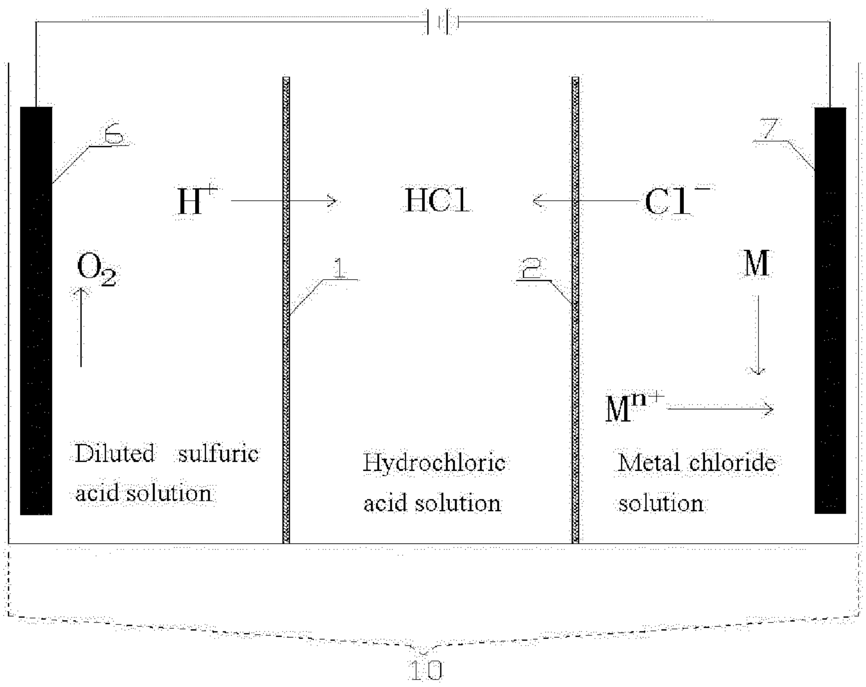
6
7
H+
HCl
Cl−
O2
M
1
2
Mn+
Diluted sulfuric acid solution
Hydrochloric acid solution
Metal chloride solution
10

Fig. 2

# INTERNATIONAL SEARCH REPORT

International application No.
**PCT/CN2013/000292**

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: C25C 1/-, C25C 7/-

Documentation searched other than minimum documentation to the extent that such documents are included in the fields searched

Electronic data base consulted during the international search (name of data base and, where practicable, search terms used)

WPI; EPODOC; CNKI; CNPAT; CA: cathode chamber, anolyte, catholyte, dilute sulfuric acid, acidic solution, membrane process, electro+, electroanalysis, electrolysis, deposit+, refin+, metal???, chloride, membrane, cation, selective, diaphragm, anion, electrolytic cell, anode chamber, middle, cathode, anode, dilute, sulphuric acid, diluted hydrochloric acid, separate+, single, direct-current, power, electrolysis, water, oxidat+, acquire, oxygen gas, hydrochloric acid

**C. DOCUMENTS CONSIDERED TO BE RELEVANT**

| Category* | Citation of document, with indication, where appropriate, of the relevant passages | Relevant to claim No. |
|---|---|---|
| Y | CN 102108519 A (HARBIN INSTITUTE OF TECHNOLOGY AT WEIHAI), 29 June 2011 (29.06.2011), description, paragraphs 0005-0006 | 1-6 |
| Y | CN 2721628 Y (GUILIN INSTITUTE OF TECHNOLOGY), 31 August 2005 (31.08.2005), particular embodiments, and figures 1-2 | 1-6 |
| A | CN 1548585 A (GANSU ACADEMY OF MEMBRANE SCIENCE AND TECHNOLOGY), 24 November 2004 (24.11.2004), description, page 2, line 2 to page 3, line 10 | 1-10 |
| A | JP 2011-42820 A (SUMITOMO METAL MINING CO.), 03 March 2011 (03.03.2011), description, paragraphs 0008-0010 | 1-10 |
| A | WO 2009/117354 A2 (ELTRON RESEARCH & DEVELOPMENT INC.), 24 September 2009 (24.09.2009), description, paragraphs 0063-0186 | 1-10 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 10 June 2013 (10.06.2013) | **04 July 2013 (04.07.2013)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br>**WANG, Chunhui**<br>Telephone No.: (86-10) **82245415** |

Form PCT/ISA/210 (second sheet) (July 2009)

# INTERNATIONAL SEARCH REPORT
Information on patent family members

International application No.
**PCT/CN2013/000292**

| Patent Documents referred in the Report | Publication Date | Patent Family | Publication Date |
|---|---|---|---|
| CN 102108519 A | 29.06.2011 | None | |
| CN 2721628 Y | 31.08.2005 | None | |
| CN 1548585 A | 24.11.2004 | CN 100516124 C | 22.07.2009 |
| JP 2011-42820 A | 03.03.2011 | None | |
| WO 2009/117354 A2 | 24.09.2009 | WO 2009117354 A3 | 23.12.2009 |
| | | US 2011120879 A1 | 26.05.2011 |
| | | US 8202411 B2 | 19.06.2012 |

Form PCT/ISA/210 (patent family annex) (July 2009)

# INTERNATIONAL SEARCH REPORT

International application No.

PCT/CN2013/000292

**CLASSIFICATION OF SUBJECT MATTER:**

C25C 1/08 (2006.01) i

C25C 7/04 (2006.01) i

Form PCT/ISA/210 (extra sheet) (July 2009)